# EUROPEAN PATENT APPLICATION

(11) **EP 4 213 282 A1**
(43) Date of publication of application: **19.07.2023**
(21) Application number: 23150257.6
(22) Date of filing: 04.01.2023
(51) Int. Cl.: H01M 50/176, H01M 50/548, H01M 50/553, H01M 50/533, H01M 50/103, H01M 50/15, H01M 10/0525, H01M 10/0585, H01M 10/0587

(54) **SECONDARY BATTERY**

(30) Priority: 14.01.2022 KR 20220005833
(71) Applicant: Samsung SDI Co., Ltd., Yongin-si, Gyeonggi-do 17084 (KR)
(72) Inventor: Lee, Hyun Soo, 17084 Yongin-si, Gyeonggi-do (KR); Yong, Jun Sun, 17084 Yongin-si, Gyeonggi-do (KR); Shin, Ho Jun, 17084 Yongin-si, Gyeonggi-do (KR)
(74) Representative: Gulde & Partner

(57) **Abstract**

A secondary battery (100, 200, 300) includes an electrode assembly (110, 110A, 110B, 110C, 110D) having a first electrode tab (114, 214) protruding from a first side of the electrode assembly (110, 110A, 110B, 110C, 110D) and a second electrode tab (115, 315) protruding from a second side of the electrode assembly (110, 110A, 110B, 110C, 110D); a case (120) accommodating the electrode assembly (110, 110A, 110B, 110C, 110D) and having a first opening (121) at one side of the case (120) and a second opening (122) at another side of the case (120); a first terminal (130) electrically coupled to the first electrode tab (114, 214) of the electrode assembly (110, 110A, 110B, 110C, 110D); a first cap plate (151) sealing the first opening (121) of the case (120) and exposing the first terminal (130) to the outside; a second terminal (140) electrically coupled to the second electrode tab (115, 315) of the electrode assembly (110, 110A, 110B, 110C, 110D); and a second cap plate (161) sealing the second opening (122) of the case (120) and exposing the second terminal (140) to the outside, wherein the first electrode tab (114, 214) and the second electrode tab (115, 315) have bent portions.

## Description

### BACKGROUND

### 1. Field

Various embodiments of the present invention relate to a secondary battery.

### 2. Description of the Related Art

A secondary battery is a power storage system that provides excellent energy density for storing electrical energy in the form of chemical energy. Compared to non-rechargeable primary batteries, secondary batteries are rechargeable and are widely used in IT devices such as smartphones, cellular phones, laptops, and tablet PCs. Recently, in order to prevent environmental pollution, interest in electric vehicles has increased, and high-capacity secondary batteries are being adopted for electric vehicles accordingly. Such secondary batteries are required to have characteristics such as high density, high output, and stability.

The above information disclosed in this Background section is only for enhancement of understanding of the background of the present invention and therefore it may contain information that does not constitute prior art.

### SUMMARY

One or more embodiments of the present invention provide a secondary battery capable of increasing the capacity of an electrode assembly that can be accommodated in a case of the same size and facilitating a welding process between electrode tabs and terminals, because after welding the electrode tabs, the electrode tabs protrude outwardly towards openings in both sides of a case that houses the electrode tabs, and the electrode tabs are connected to terminals in a state in which the electrode tabs are bent and inserted into the case, and cap assemblies can seal the openings in both sides of the case, respectively.

A secondary battery according to one or more embodiments of the present invention includes: an electrode assembly including a first electrode tab protruding from a first side of the electrode assembly and a second electrode tab protruding from a second side of the electrode assembly; a case accommodating the electrode assembly and having a first opening at one side of the case and a second opening at another side of the case; a first terminal electrically coupled to the first electrode tab of the electrode assembly; a first cap plate sealing the first opening of the case and exposing the first terminal to the outside; a second terminal electrically coupled to the second electrode tab of the electrode assembly; and a second cap plate sealing the second opening of the case and exposing the second terminal to the outside, wherein the first electrode tab and the second electrode tab have bent portions.

In one or more embodiments, the first electrode tab may have a plate shape, and may include a first tab coupling part in contact with the first side of the electrode assembly; a first terminal coupling part welded to one surface of the first terminal and parallel to the first tab coupling part; and a first connecting part that connects the first tab coupling part and has a bent portion.

In one or more embodiments, the first electrode tab and the second electrode tab may have the same length and shape.

In one or more embodiments, the first connecting part may have a region parallel to the first tab coupling part and the first terminal coupling part, and the first connecting part may have two bent portions, where a first bent portion of the two bent portions is connected to the first terminal coupling part and a second bent portion of the two bent portions is connected to the first tab coupling part.

In one or more embodiments, the first connecting part may include one bent portion connecting the first terminal coupling part and the first tab coupling part, where the first terminal coupling part and the first tab coupling part face each other.

In one or more embodiments, the first electrode tab and the second electrode tab may have different lengths and shapes.

In one or more embodiments, the second electrode tab may have a plate shape, and may include a second tab coupling part contacting the second side of the electrode assembly, a second terminal coupling part welded to one surface of the second terminal and parallel to the second tab coupling part, and a second connecting part connecting the second tab coupling part and the second terminal coupling part and having a bent portion.

In one or more embodiments, the first connecting part of the first electrode tab may have one bent portion connecting the first terminal coupling part and the first tab coupling part, where the first terminal coupling part and the first tab coupling part face each other. The second connecting part of the second electrode tab may have a region parallel with the second tab coupling part and the second terminal coupling part. The second connecting part may include a first bent portion connected to the second terminal coupling part and a second bent portion connected to the second tab coupling part.

In one or more embodiments, the first electrode tab and the second electrode tab may include a plurality of uncoated regions to which an electrode active material is not applied to first and second electrode plates of the electrode assembly, respectively, where the plurality of uncoated regions are cut and stacked together.

In one or more embodiments, the first electrode tab and the second electrode tab may include separate auxiliary plates, each of which is coupled to the first side or the second side of the electrode assembly, respectively, by welding, and is the shape of a plate extending and protruding from the first side or the second side of the electrode assembly, respectively.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view illustrating a secondary battery according to one or more embodiments of the present invention.
FIG. 2 is a cross-sectional view taken along the line 2-2' in the secondary battery of FIG. 1, according to one or more embodiments of the present invention.
FIGS. 3A and 3B are perspective views illustrating an example of an electrode assembly applicable to FIGS. 1 and 2, according to one or more embodiments of the present invention.
FIGS. 4A and 4B are perspective views illustrating another example of an electrode assembly that can be applied to FIGS. 1 and 2, according to one or more embodiments of the present invention.
FIG. 5 is an enlarged cross-sectional view illustrating one end and the other end of the secondary battery of FIG. 2, according to one or more embodiments of the present invention.
FIG. 6 is an enlarged cross-sectional view illustrating one end and the other end of a secondary battery, according to one or more embodiments of the present invention.
FIG. 7 is an enlarged cross-sectional view illustrating one end and the other end of a secondary battery, according to one or more embodiments of the present invention.

### DETAILED DESCRIPTION

Hereinafter, one or more embodiments of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example embodiments set forth herein. Rather, these example embodiments are provided so that this disclosure will be thorough and complete and will convey the aspects and features of the present invention to those skilled in the art. Accordingly, processes, elements, and techniques that are not necessary to those having ordinary skill in the art for a complete understanding of the aspects and features of the present invention may not be described.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "on," "connected to," or "coupled to" an element B, the element A can be directly on, connected to or coupled to the element B or an intervening element C may be present therebetween such that the element A and the element B are indirectly connected to each other. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise" "comprising," "include," or "including" when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, the use of "may" when describing embodiments of the present invention refers to "one or more embodiments of the present invention." As used herein, the terms "use," "using," and "used" may be considered synonymous with the terms "utilize," "utilizing," and "utilized," respectively. Also, the term "exemplary" is intended to refer to an example or illustration.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

One or more embodiments of the present invention will be described in detail with reference to the accompanying drawings to the extent that a person skilled in the art to which the present invention pertains can practice the present invention.

Here, the same reference numerals are given to parts having similar configurations and operations throughout the specification. In addition, it will be understood that when a portion is referred to as being electrically coupled to another portion, this includes not only the case where it is directly connected, but also the case where it is connected with another element interposed therebetween.

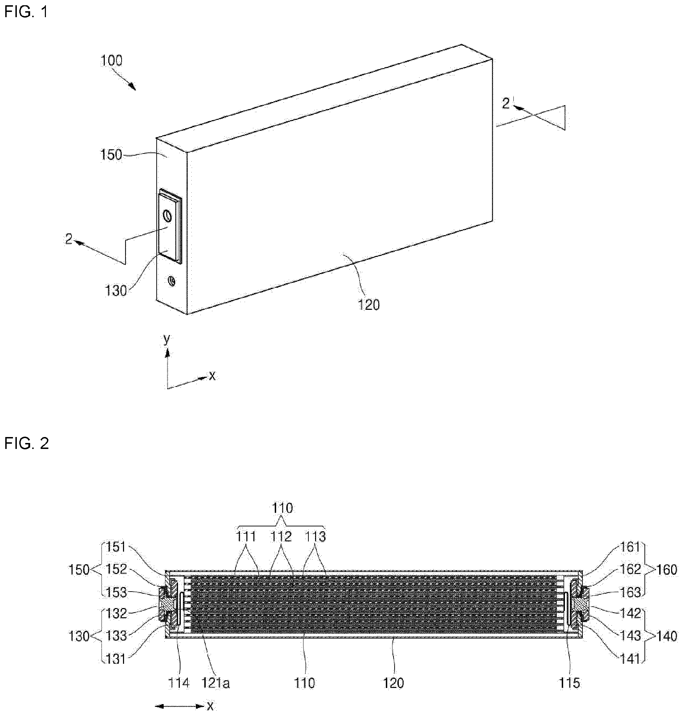

Referring to FIG. 1, a perspective view illustrating a secondary battery according to one or more embodiments of the present invention is shown. Referring to FIG. 2, a cross-sectional view taken along the line 2-2' in the secondary battery of FIG. 1 is shown.

As shown in FIGS. 1 and 2, the secondary battery 100 may include an electrode assembly 110, a case 120, a first terminal 130, a second terminal 140, a first cap assembly 150, and a second cap assembly 160.

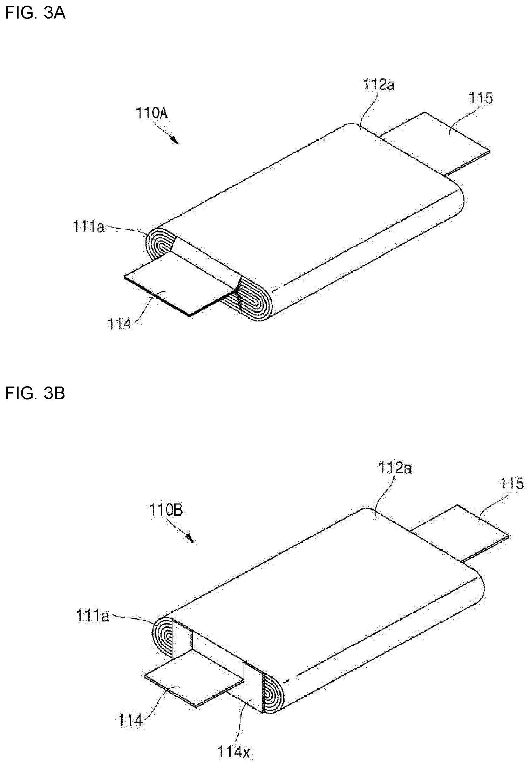

The electrode assembly 110 may be formed by winding or stacking a stack of a first electrode plate 111, a separator 113, and a second electrode plate 112, which are formed as thin plates or films. As the electrode assembly 110, electrode assemblies 110A and 110B shown in FIGS. 3A and 3B, in which the stack of the first electrode plate 111, the separator 113, and the second electrode plate 112 is wound, or electrode assemblies 110C and 110D in which the first electrode plate 111, the separator 113, and the second electrode plate 112 are alternately stacked, may be used.

As shown in FIGS. 3A and 3B, the electrode assembly 110 may be formed by winding a stack of the first electrode plate 111, the separator 113, and the second electrode plate 112. The electrode assembly 110 will now be described with reference to FIGS. 3A and 3B.

The electrode assemblies 110A and 110B may have a winding axis parallel to the first direction x, which is the longitudinal direction of the case 120. Here, the first direction (x) may be perpendicular to the second direction (y), which is the longitudinal direction of the first cap assembly 150 and the second cap assembly 160. The first electrode plate 111 of the electrode assemblies 110A and 110B may serve as a negative electrode, and the second electrode plate 112 may serve as a positive electrode. Of course, the reverse is also possible. The electrode assemblies 110A and 110B may be formed by winding a stack in which a long foil-shaped first electrode plate 111, a separator 113, and a second electrode plate 112, being in a long-foil shape, are sequentially stacked around a winding shaft.

The first electrode plate 111 may be formed by coating a first electrode active material, such as graphite or carbon, on a first electrode current collector formed of a metal foil, such as copper, a copper alloy, nickel, and/or a nickel alloy, and may include a first uncoated portion 111a, which is a region to which the first electrode active material is not applied. The first electrode plate 111 may be a metal foil extending along the second direction y. The first uncoated portion 111a may serve as a passage for current flow between the first electrode plate 111 and the first electrode tab 114.

The second electrode plate 112 may be formed by coating a second electrode active material, such as a transition metal oxide, on a second electrode current collector formed of a metal foil, such as aluminum or an aluminum alloy, and may include a second uncoated portion that is a region to which the second electrode active material is not applied. The second electrode plate 112 may be a metal foil extending along the second direction y. The second uncoated portion 112a may serve as a passage for current flow between the second electrode plate 112 and the second electrode tab 115. In one or more embodiments, the first electrode tab 114 may be positioned on the left side of the electrode assembly 110, and the second electrode tab 115 may be positioned on the right side of the electrode assembly 110. Here, the left and right sides are for convenience of explanation on the basis of the secondary battery 100 shown in FIGS. 1 and 2, and positions thereof may be changed when the secondary battery 100 is rotated left and right or up and down. Hereinafter, various components will be described with reference to the secondary battery 100 shown in FIGS. 1 and 2.

As shown in FIG. 3A, the first electrode tab 114 of the electrode assembly 110A may be formed by cutting the first uncoated portion 111a in advance to protrude to the left when the first electrode plate 111 is manufactured, and may be formed integrally with the first electrode plate 111. Multiple first electrode tabs 114 integrally formed with the first electrode plate 111 are stacked after the electrode assembly 110A is wound and are then coupled by tack welding. The first electrode tab 114 may extend and protrude from the left surface of the electrode assembly 110 in the first direction (x), and may have a plate shape.

In addition, the second electrode tab 115 of the electrode assembly 110A may be formed by cutting the second uncoated portion 112a in advance to protrude to the right when the second electrode plate 112 is manufactured, and may be formed integrally with the second electrode plate 112. Multiple second electrode tabs 115 integrally formed with the second electrode plate 112 are stacked after the electrode assembly 110A is wound and are then coupled by tack welding. The second electrode tabs 115 may extend and protrude from the right surface of the electrode assembly 110 in the first direction (x), and may have a plate shape. That is, the second electrode tabs 115 may protrude to the other side from the first electrode tab 114 with respect to the electrode assembly 110A. In addition, because the first electrode tabs 114 and the second electrode tabs 115 are formed by stacking a plurality of metal foils, bending may be facilitated.

As another example, as shown in FIG. 3B, in the first electrode plate 111 of the electrode assembly 110B, the first uncoated portion 111a of the first electrode plate 111 may protrude further to the left than the separator 113 without separate cutting. In addition, the first electrode tab 114 of an auxiliary plate may be coupled to the first uncoated portion 111a of the first electrode plate 111 exposed to the left surface of the electrode assembly 110B by welding. The auxiliary plate may include a first region 114x welded to the first uncoated portion 111a exposed to the left side of the electrode assembly 110B, and a first electrode tab 114 extending and protruding from the first region 114x in the first direction (x). Here. the first electrode tab 114 may have a plate shape. Also, the first region 114x may be electrically and mechanically coupled to the first uncoated portion 111a by being welded in contact with the left surface of the electrode assembly 110B.

In the second electrode plate 112 of the electrode assembly 110B, the second uncoated portion 112a of the second electrode plate 112 may protrude further to the right than the separator 113 without separate cutting. In addition, the second electrode tab 115 of an auxiliary plate may be coupled to the second uncoated portion 112a of the second electrode plate 112 exposed to the right side of the electrode assembly 110B by welding. The auxiliary plate may include a second region 115x welded to the second uncoated portion 112a exposed to the right surface of the electrode assembly 110B, and a second electrode tab 115 extending and protruding from the second region 115x in the first direction (x). Here, the second electrode tab 115 may have a plate shape. Also, the second region 115x may be electrically and mechanically coupled to the second uncoated portion 112a by being welded in contact with the right surface of the electrode assembly 110B. That is, the second electrode tab 115 may protrude to the other side from the first electrode tab 114 with respect to the electrode assembly 110B. In addition, the first electrode tab 114 and the second electrode tab 115 may be made of a material that can be easily bent or a metal plate that can be bent with a bending machine.

In one or more embodiments, the separator 113 may be positioned between the first electrode plate 111 and the second electrode plate 112 to prevent (or substantially prevent) a short circuit and to enable the movement of lithium ions, and may include polyethylene, polypropylene, or a composite film of ethylene and polypropylene. In addition, the separator 113 may be replaced with an inorganic solid electrolyte such as a sulfide-based, oxide-based and/or phosphate-based electrolyte that does not require a liquid or gel electrolyte.

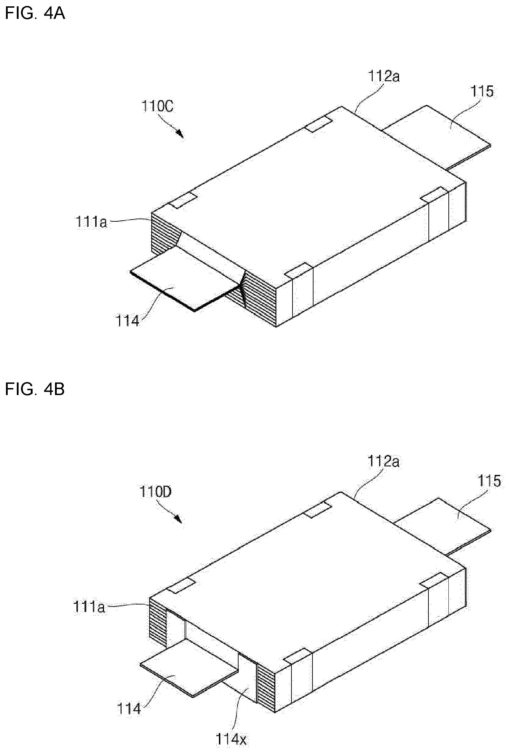

As another example, as shown in FIGS. 4A and 4B, each of the electrode assemblies 110C and 110D may be a laminate in which a first electrode plate 111, a separator 113, and a second electrode plate 112 are sequentially alternately stacked. The electrode assemblies 110C and 110D will now be described with reference to FIGS. 4A and 4B.

Each of the electrode assemblies 110C and 110D may be a laminate in which a plate-shaped first electrode plate 111, a separator 113, and a second electrode plate 112, being in a plate shape, are sequentially alternately stacked. The first electrode plate 111 of the electrode assemblies 110A and 110B may serve as a negative electrode, and the second electrode plate 112 may serve as a positive electrode. Of course, the reverse is also possible.

The first electrode plate 111, the second electrode plate 112, and the separator 113 of the electrode assemblies 110C and 110D shown in FIGS. 4A and 4B may be similar to those of the electrode assemblies 110A and 110B shown in FIGS. 3A and 3B, respectively. However, the electrode assemblies 110C and 110D shown in FIGS. 4A and 4B may differ from the electrode assemblies 110A and 110B shown in FIGS. 3A and 3B in that the electrode assemblies 110C and 110D shown in FIGS. 4A and 4B are stack-type laminates in which the first electrode plate 111, the second electrode plate 112, and the separator 113 are sequentially alternately stacked. In the electrode assemblies 110C and 110D, the first electrode tab 114 may be formed by cutting the uncoated portion 111a (FIG. 4A) or by welding a separate auxiliary plate to the left surface of the electrode assembly 110 (FIG. 4B). Of course, the second electrode tab 115 may also be formed in the same manner as the first electrode tab 114.

The case 120 may have a substantially hollow rectangular parallelepiped shape in which openings 121 and 122 are formed on both sides. The electrode assembly 110 having the first electrode tab 114 and the second electrode tab 115 may be inserted into the case 120 through the openings 121 and 122. In the case 120 , the first cap assembly 150 and the second cap assembly 160 may be respectively coupled to the openings 121 and 122 on both sides. The case 120 may be formed of an aluminum alloy or a conductive metal, such as nickel-plated steel, and the inner surface may be insulated with a simple (or basic) insulation to prevent (or substantially prevent) an electrical short circuit from occurring therein.

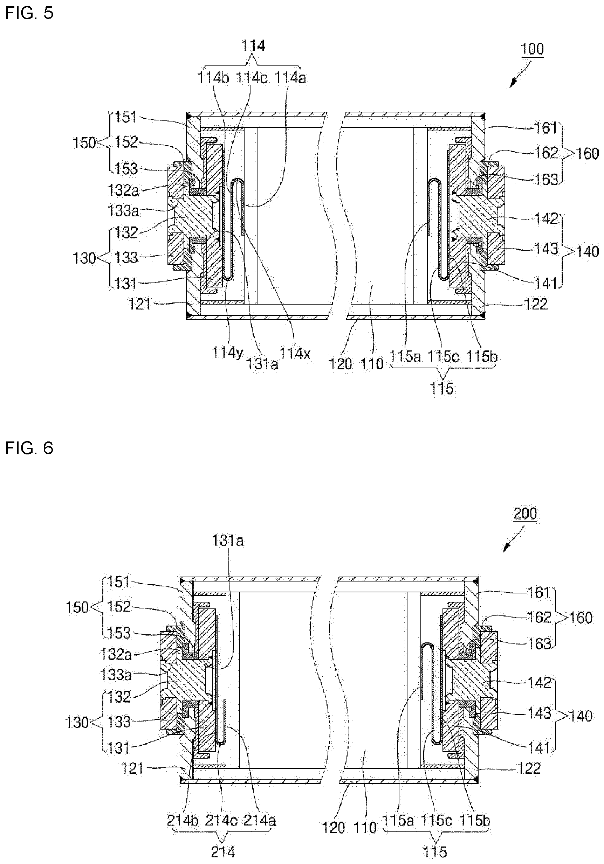

The first terminal 130, for example, as shown in FIGS. 2 and 5, may be formed of a metal and may be electrically connected to the first electrode tab 114. In one or more embodiments, the first terminal 130 may include a first inner terminal plate 131, a first terminal pillar 132, and a first outer terminal plate 133. Referring to FIG. 5, an enlarged cross-sectional view illustrating the left end of the secondary battery 100 in which the first terminal 130 is positioned and the right end of the secondary battery 100 in which the second terminal 140 is positioned is shown. The secondary battery 100 will now be described with reference to FIG. 5.

Here, the first inner terminal plate 131 may be located inside a first cap plate 151 to be described in more detail below, and the first outer terminal plate 133 may be located outside the first cap plate 151. Of course, a first coupling member 152 may be further interposed between the first outer terminal plate 133 and the first cap plate 151. In addition, a first seal gasket 153 may be further interposed between the first terminal pillar 132 and the first cap plate 151 and between the first inner terminal plate 131 and the first cap plate 151. In addition, the first terminal pillar 132 may pass through the first cap plate 151 to be coupled to the first outer terminal plate 133 from the outside of the first cap plate 151 and to be coupled to the first inner terminal plate 131 from the inside of the first cap plate 151.

The first inner terminal plate 131 may be in contact with and coupled to a first terminal coupling part 114b of the first electrode tab 114 on one surface positioned on the right side. The first inner terminal plate 131 may include a terminal hole 131a penetrating between (or from) one surface of the first inner terminal plate 131 and (or to) the other surface. Of course, the terminal hole 131a may be formed to correspond to the diameter of the first terminal pillar 132.

The first terminal pillar 132 may be fitted and coupled to the terminal hole 131a of the first inner terminal plate 131. For example, the first terminal pillar 132 may be fixed by riveting and/or welding on one surface while being inserted into the terminal hole 131a of the first inner terminal plate 131. The first terminal coupling part 114b of the first electrode tab 114 may be coupled to one surface of the first inner terminal plate 131 coupled to the first terminal pillar 132 by welding.

The first terminal pillar 132 may have a pillar shape and may protrude and extend to the outside of the first cap plate 151. In addition, the first terminal pillar 132 have a flange 132a formed outside the first cap plate 151 so as to prevent (or substantially prevent) the first terminal pillar 132 from being dislodged from the first cap plate 151. The first terminal pillar 132 may be inserted into and coupled to the terminal hole 133a of the first outer terminal plate 133 from the outside of the first cap plate 151, or may be inserted into and coupled to the terminal hole 131a of the first inner terminal plate 131 from the inside of the first cap plate 151. Here, the flange 132a may be positioned between the first outer terminal plate 133 and the first cap plate 151.

The first outer terminal plate 133 may include a terminal hole 133a penetrating between (or from) one surface of the first terminal plate 133 and (or to) the other surface. The outer extension of the first terminal pillar 132 may be inserted into the terminal hole 133a of the first outer terminal plate 133 to be coupled thereto. For example, in a state in which the first terminal pillar 132 is inserted into the terminal hole 133a of the first outer terminal plate 133 from the outside of the first cap plate 151, the first terminal pillar 132 may be riveted or/and welded from the other surface located on the left. One side of the first outer terminal plate 133 may be located on the right side and may face the outer surface of the first cap plate 151. Of course, an insulating member 152 for insulation may be interposed between one surface of the first outer terminal plate 133 and the outer surface of the first cap plate 151.

The first inner terminal plate 131, the first terminal pillar 132, and the first outer terminal plate 133, which serve as the first terminal 130, may be made of copper or a copper alloy. In the first terminal 130, the first outer terminal plate 133 and the first terminal pillar 132 may be exposed and protrude to the outside of the first cap plate 151. In addition, the first terminal pillar 132 and the first inner terminal plate 131 may be electrically connected to the first electrode tab 114 inside the first cap plate 151. Here, one surface of the first inner terminal plate 131 may face the left surface of the electrode assembly 110. Of course, the first electrode tab 114 may be interposed between one surface of the first inner terminal plate 131 and the left surface of the electrode assembly 110 to electrically connect the first terminal 130 and the electrode assembly 110 to each other.

The second terminal 140 may be formed of a metal and may be electrically connected to the second electrode tab 115. In one or more embodiments, the second terminal 140 may include a second inner terminal plate 141, a second terminal pillar 142, and a second outer terminal plate 143.

Here, the second inner terminal plate 141 may be located inside a second cap plate 161, and the second outer terminal plate 143 may be located outside the second cap plate 161. Of course, a second seal gasket 163 may be further interposed between the second outer terminal plate 143 and the second cap plate 161. In addition, the second seal gasket 163 may be further interposed between the second terminal pillar 142 and the second cap plate 161 and between the second inner terminal plate 141 and the second cap plate 161. In addition, the second terminal pillar 142 may pass through the second cap plate 161 to be coupled to the second outer terminal plate 143 from (or at) the outside of the second cap plate 161 and to be coupled to the second inner terminal plate 141 from (or at) the inside of the second cap plate 161.

The second terminal 140 may have the same shape and structure as the first terminal 130. However, the second terminal 140 may be coupled to the electrode assembly 110 through the second electrode tab 115 so as to be symmetrical to the first terminal 130 with respect to the electrode assembly 110. Also, the second terminal 140 may be made of aluminum or an aluminum alloy.

The first cap assembly 150 may be coupled to the left opening 121 of the case 120. In one or more embodiments, the first cap assembly 150 may include a first cap plate 151, a first coupling member 152, and a first seal gasket 153. The first cap plate 151 may have a flat square plate shape to seal the left opening 121 of the case 120. The first cap plate 151 may have a rectangular plate shape corresponding to the left opening 121 of the case 120. The first cap plate 151 may include a terminal hole 151a penetrating between (or from) the outer surface of the first cap plate 151 and (or to) the inner surface. The first terminal pillar 132 may be inserted into the terminal hole 151a of the first cap plate 151 to be coupled to the first cap plate 151. In addition, the first terminal pillar 132 may be coupled to the first outer terminal plate 133 on the left side of the first cap plate 151 and may be coupled to the first inner terminal plate 131 on the right side of the first cap plate 151. Here, the first inner terminal plate 131 and a portion of the right side of the first terminal pillar 132 may be located inside the case 120.

The first coupling member 152 may be interposed between the outer surface of the first cap plate 151 and the first outer terminal plate 133. The first coupling member 152 may be in close contact with the first cap plate 151, and may also be in close contact with the first seal gasket 153. The first coupling member 152 may be made of an insulating material and may insulate the first cap plate 151 and the first outer terminal plate 133 from each other and the first cap plate 151 and the first terminal pillar 132 from each other.

In addition, the first seal gasket 153, made of an insulating material, may be formed between the first cap plate 151 and the first terminal 130 to seal the first cap plate 151 and the first terminal 130 to each other. That is, the first seal gasket 153 may be interposed between the first cap plate 151 and the first terminal pillar 132 and between the first cap plate 151 and the first inner terminal plate 131. The first seal gasket 153 prevents (or substantially prevents) external moisture from penetrating into the secondary battery 100 or prevents (or substantially prevents) the electrolyte contained in the secondary battery 100 from leaking out.

In addition, after the electrode assembly 110 having the first electrode tab 114 is accommodated in the case 120, the first cap plate 151 coupled to the first terminal 130 may seal the left opening 121 of the case 120. Of course, before the first cap plate 151 seals the case 120, the first electrode tab 114 and the first inner terminal plate 131 of the first terminal 130 may be coupled by welding. In addition, after the first electrode tab 114 and the first terminal 130 are coupled to each other, the first electrode tab 114 may be bent so that the first cap plate 151 is coupled to the left opening 121 of the case 120. Here, the first electrode tab 114 may be bent and inserted into the case 120. The first cap plate 151 may be coupled to the left opening 121 of the case 120 by welding.

The first electrode tab 114 includes a first terminal coupling part 114b, which is a region to be in contact with and coupled to one surface of the first inner terminal plate 131, and a first tab coupling part 114a extending from the first uncoated portion 111a of the electrode assembly 110 or coupled to the first uncoated portion 111a by welding. In addition, the first electrode tab 114 may further include a first connecting part 114c that connects the first terminal coupling part 114b and the first tab coupling part 114a.

Here, because the first terminal coupling part 114b is welded in contact with one surface of the first inner terminal plate 131, and the first tab coupling part 114a is a region being in contact with the left surface of the electrode assembly 110 facing one surface of the first inner terminal plate 131, the first terminal coupling part 114b and the first tab coupling part 114a may be parallel to each other. In addition, at least one region of the first connecting part 114c may be parallel to the first terminal coupling part 114b and/or the first tab coupling part 114a. That is, the first connecting part 114c may be bent in two stages. The first connecting part 114c may have a bent portion 114x at a region connected to the first terminal coupling part 114b and a bent portion 114y at a region connected to the first tab coupling part 114a.

The second cap assembly 160 may be coupled to the right opening 122 of the case 120. In one or more embodiments, the second cap assembly 160 may include the second cap plate 161, a second coupling member 162, and a second seal gasket 163. The second cap assembly 160 may have the same shape and structure as the first cap assembly 150. In addition, the coupling shape and structure of the second cap assembly 160 and the second terminal 140 may be the same as the coupling shape and structure of the first cap assembly 150 and the first terminal 130. However, the coupling shape of the second cap assembly 160 and the second terminal 140 may be symmetrical with the coupling shape of the first cap assembly 150 and the first terminal 130 with respect to the case 120.

In addition, after the electrode assembly 110 having the second electrode tab 115 is accommodated in the case 120, the second cap plate 161 coupled to the second terminal 140 may seal the opening of the case 120. Of course, before the second cap plate 161 seals the case 120, the second electrode tab 115 and the second inner terminal plate 141 of the second terminal 140 may be coupled to each other by welding. Also, after the second electrode tab 115 and the second terminal 140 are coupled to each other, the second electrode tab 115 may be bent so that the second cap plate 161 is coupled to the right opening 122 of the case 120. Here, the second electrode tab 115 may be bent and inserted into the case 120. The second cap plate 161 may be coupled by welding while being inserted into the right opening 122 of the case 120.

The second electrode tab 115 includes a second terminal coupling part 115b, which is a region to be in contact with and coupled to one surface of the second inner terminal plate 141, and a second tab coupling part 115a extending from the second uncoated portion 112a of the electrode assembly 110 or coupled to the second uncoated portion 112a by welding. In addition, the second electrode tab 115 may further include a second connecting part 115c that connects the second terminal coupling part 115b and the second tab coupling part 115a.

Here, because the second terminal coupling part 115b is welded in contact with one surface of the second inner terminal plate 141, and the second tab coupling part 115a is a region in contact with the right surface of the electrode assembly 110 facing one surface of the second inner terminal plate 141, the second terminal coupling part 115b and the second tab coupling part 115a may be parallel to each other. In addition, at least one region of the second connecting part 115c may be parallel to the second terminal coupling part 115b and/or the second tab coupling part 115a. That is, the second connecting part 115c may be bent in two stages. The second connecting part 115c may have a bent portion at a region connected to the second terminal coupling part 115b and a bent portion at a region connected to the second tab coupling part 115a. The second electrode tab 115 may have the same length and shape as the first electrode tab 114.

In the aforementioned secondary battery 100, the first electrode tab 114 and the second electrode tab 115 are bent and accommodated inside the case 120, and thus the electrode assembly 110 accommodated in the case 120 of the same size can be increased. In addition, in the secondary battery 100, after the electrode tabs 114 and 115 protruding outward through the openings 121 and 122 on both sides of the case 120 are welded to the terminals 130 and 140, the cap assemblies 150 and 160 may seal the openings 121 and 122 of the case 120, thereby facilitating welding of the electrode tabs 114 and 115 and the terminals 130 and 140.

In the aforementioned secondary battery 100, because the first cap assembly 150 coupled to the first terminal 130 is coupled to the left opening 121 of the case 120, and the second cap assembly 160 coupled to the second terminal 140 is coupled to the right opening 122 of the case 120, the first terminal 130 and the second terminal 140 are located on both sides of the case 120. The secondary battery 100 includes a first terminal 130 and a second terminal 140 on both (e.g., different) sides of the case 120, respectively, and thus, cooling members may be coupled to the upper and lower regions of the case 120 when a plurality of secondary batteries 100 are combined in a module form, thereby reducing deterioration of the secondary battery 100 and improving cooling performance.

For example, a battery module may electrically connect a first terminal and/or a second terminal exposed to one side of the case 120 or the other, respectively, in a state in which long sides of a plurality of secondary batteries 100 are disposed to face each other.

In addition, because the secondary battery 100 includes a first terminal 130 and a second terminal 140 on both (e.g., different) sides of the case 120, respectively, charge/discharge current flows along each terminal from both sides when a number of secondary batteries are combined in a module form, thereby solving a deterioration problem due to charge and discharge current, compared to a case in which two terminals are provided at one side and charge/discharge current flows to two terminals from one side. In addition, when a number of secondary batteries are combined in a module form, terminals can be connected in both directions, and space utilization can be increased.

Referring to FIG. 6, an enlarged cross-sectional view illustrating one end and the other end of a secondary battery 200 according to one or more embodiments of the present invention is shown. The secondary battery 200 may include an electrode assembly 110, a case 120, a first terminal 130, a second terminal 140, a first cap assembly 150, and a second cap assembly 160, and the configuration thereof may be similar to that of the secondary battery 100 shown in FIGS. 1 and 2. However, the secondary battery 200 may differ from the secondary battery 100 with respect to the shape of a first electrode tab 214. The following description will focus on a first electrode tab 214 of the secondary battery 200, which is different from the corresponding element of the secondary battery 100. Of course, the secondary battery 200 may include any one of the electrode assemblies 110A, 110B, 110C, or 110D shown in FIGS. 3A, 3B, 4A, and 4B.

The first electrode tab 214 includes a first terminal coupling part 214b that is a region to be in contact with and coupled to one surface of the first inner terminal plate 131, and a first tab coupling part 214a extending from the first uncoated portion 111a of the electrode assembly 110 or coupled to the first uncoated portion 111a by welding. In addition, the first electrode tab 214 may further include a first connecting part 214c that connects the first terminal coupling part 214b and the first tab coupling part 214a.

Here, because the first terminal coupling part 214b is welded in contact with one surface of the first inner terminal plate 131, and the first tab coupling part 214a is a region being in contact with the left surface of the electrode assembly 110 facing one surface of the first inner terminal plate 131, the first terminal coupling part 214b and the first tab coupling part 214a may be parallel to each other. In addition, one surface of the first terminal coupling part 214b and one surface of the first tab coupling part 214a may be parallel to each other. The first connecting part 214c that connects the first terminal coupling part 214b and the first tab coupling part 214a may have one bent portion. That is, the first connecting part 214c may have one bend (e.g., may be bent in one stage). The first electrode tab 214 may have a different shape and length from the second electrode tab 115. In one or more embodiments, the length of the first electrode tab 214 bent once (e.g., may be bent in one stage) may be shorter than that of the second electrode tab 115 that is bent twice (e.g., bent in two stages). Conversely, in the secondary battery 200, the first electrode tab 214 may be bent twice (e.g., bent in two stages), and the second electrode tab 115 may be bent once (e.g., bent in one stage).

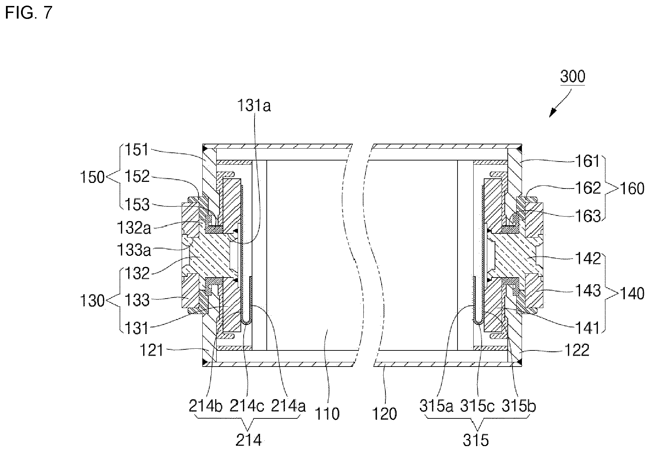

Referring to FIG. 7, an enlarged cross-sectional view illustrating one end and the other end of a secondary battery 300 according to one or more embodiments of the present invention is shown. The secondary battery 400 may include an electrode assembly 110, a case 120, a first terminal 130, a second terminal 140, a first cap assembly 150, and a second cap assembly 160, and the configuration thereof may be similar to that of the secondary battery 100 shown in FIGS. 1 to 2. However, the secondary battery 300 may differ from the secondary battery 100 with respect to the shapes of a first electrode tab 214 and a second electrode tab 315. Here, the first electrode tab 214 may be similar to the first electrode tab of the secondary battery 200 shown in FIG. 6.

The following description will focus on the second electrode tab 314, which is different from the corresponding element of the secondary battery 100 or the secondary battery 200. Of course, the secondary battery 300 may include the electrode assembly 110A, 110B, 110C, or 110D shown in FIGS. 3A, 3B, 4A, and 4B.

The second electrode tab 315 includes a second terminal coupling part 315b, which is a region to be in contact with and coupled to one surface of the second inner terminal plate 141, and a second tab coupling part 315a extending from the second uncoated portion 112a of the electrode assembly 110 or coupled to the second uncoated portion 112a by welding. In addition, the second electrode tab 315 may further include a second connecting part 315c that connects the second terminal coupling part 315b and the second tab coupling part 315a.

Here, because the second terminal coupling part 315b is welded in contact with one surface of the second inner terminal plate 141, and the second tab coupling part 315a is a region in contact with the right surface of the electrode assembly 110 facing one surface of the second inner terminal plate 141, the second terminal coupling part 315b and the second tab coupling part 315a may be parallel to each other.

In addition, one surface of the second terminal coupling part 315b and one surface of the second tab coupling part 315a may be parallel to each other. The second connecting part 315c that connects the second terminal coupling part 315b and the second tab coupling part 315a may have one bent portion. The second electrode tab 315 may have the same shape and length as the first electrode tab 214. The second electrode tab 315 and the first electrode tab 214 may be symmetrical with respect to the electrode assembly 110.

As described above, in the secondary battery of the present invention, after welding the electrode tabs that protrude outwardly through the openings on both sides of the case to the terminals, a cap assembly can seal the openings on both sides of the case while the electrode tabs are bent and inserted into the case, thereby increasing the capacity of the electrode assembly that can be accommodated in the case of the same size, and facilitating the welding process between the electrode tabs and the terminals.

In addition, because the secondary battery of the present invention includes a first terminal and a second terminal on both (e.g., different) sides, respectively, cooling members can be coupled to the upper and lower regions of the case, respectively, even when a plurality of secondary batteries are combined in a module form, thereby reducing deterioration of the secondary battery and improving the cooling performance.

In addition, because the secondary battery of the present invention includes a first terminal and a second terminal on both (e.g., different) sides, respectively, charge/discharge current flows along each terminal from both (e.g., different) sides when a number of secondary batteries are combined in a module form, thereby solving a deterioration problem due to charge/discharge current and increasing space utilization.

While the foregoing embodiments have been provided for carrying out the secondary battery according to the present invention, it should be understood that the embodiments described herein should be considered in a descriptive sense only and not for purposes of limitation, and various changes in form and details may be made therein without departing from the scope of the present invention as defined by the following claims.

It is clear for one of ordinary skill in the art that the disclosed embodiments can be combined where possible.

## Claims

1. A secondary battery (100, 200, 300) comprising:
an electrode assembly (110, 110A, 110B, 110C, 110D) comprising a first electrode tab (114, 214) protruding from a first side of the electrode assembly (110, 110A, 110B, 110C, 110D) and a second electrode tab (115, 315) protruding from a second side of the electrode assembly (110, 110A, 110B, 110C, 110D);
a case (120) accommodating the electrode assembly (110, 110A, 110B, 110C, 110D) and comprising a first opening (121) at one side of the case (120) and a second opening (122) at another side of the case (120);
a first terminal (130) electrically coupled to the first electrode tab (114, 214) of the electrode assembly (110, 110A, 110B, 110C, 110D);
a first cap plate (151) sealing the first opening (121) of the case (120) and exposing the first terminal (130) to the outside;
a second terminal (140) electrically coupled to the second electrode tab (115, 315) of the electrode assembly (110, 110A, 110B, 110C, 110D); and
a second cap plate (161) sealing the second opening (122) of the case (120) and exposing the second terminal (140) to the outside,
wherein the first electrode tab (114, 214) and the second electrode tab (115, 315) have bent portions.

2. The secondary battery (100, 200, 300) of claim 1, wherein the first electrode tab (114, 214) has a plate shape, and comprises:
a first tab coupling part (114a, 214a) in contact with the first side of the electrode assembly (110, 110A, 110B, 110C, 110D);
a first terminal coupling part (114b, 214b) welded to one surface of the first terminal (130) and parallel to the first tab coupling part (114a, 214a); and
a first connecting part (114c, 214c) that connects the first tab coupling part (114a, 214a) and the first terminal coupling part (114b, 214b) and comprising a bent portion.

3. The secondary battery (100, 200, 300) of claim 1 or 2, wherein the first electrode tab (114, 214) and the second electrode tab (115, 315) have the same length and shape.

4. The secondary battery (100, 200, 300) of claim 2 or 3, wherein the first connecting part (114c) has a region parallel to the first tab coupling part (114a) and the first terminal coupling part (114b), the first connecting part (114c) comprising two bent portions (114y, 114x), wherein a first bent portion (114y) of the two bent portions (114y, 114x) is connected to the first terminal coupling part (114b) and a second bent portion of the two bent portions (114y, 114x) is connected to the first tab coupling part (114a).

5. The secondary battery (100, 200, 300) of claim 2 or 3, wherein the first connecting part (214c) comprises one bent portion connecting the first terminal coupling part (214b) and the first tab coupling part (214a), wherein the first terminal coupling part (214b) and the first tab coupling part (214a) face each other.

6. The secondary battery (100, 200, 300) of claim 1 or 2, wherein the first electrode tab (114, 214) and the second electrode tab (115, 315) have different lengths and shapes.

7. The secondary battery (100, 200, 300) of any one of the preceding claims, wherein the second electrode tab (115, 315) has a plate shape and comprises:
a second tab coupling part (115a, 315a) contacting the second side of the electrode assembly (110, 110A, 110B, 110C, 110D);
a second terminal coupling part (115b, 315b) welded to one surface of the second terminal (140) and parallel to the second tab coupling part (115a, 315a); and
a second connecting part (115c, 315c) connecting the second tab coupling part (115a, 315a) and the second terminal coupling part (115b, 315b) and having a bent portion.

8. The secondary battery (100, 200, 300) of claim 7, wherein the first connecting part (214c) of the first electrode tab (214) comprises one bent portion connecting the first terminal coupling part (214b) and the first tab coupling part (214a), wherein the first terminal coupling part (214b) and the first tab coupling part (214a) face each other; and the second connecting part (115c) of the second electrode tab (115) has a region parallel to the second tab coupling part (115a) and the second terminal coupling part (115b), and the second connecting part (115c) includes a first bent portion connected to the second terminal coupling part (115b) and a second bent portion connected to the second tab coupling part (115a).

9. The secondary battery (100, 200, 300) of any one of the preceding claims, wherein the first electrode tab (114, 214) and the second electrode tab (115, 315) comprise a plurality of uncoated regions to which an electrode active material is not applied to first and second electrode plates (111, 112) of the electrode assembly (110, 110A, 110B, 110C, 110D), respectively, wherein the plurality of uncoated regions are cut and stacked together.

10. The secondary battery (100, 200, 300) of any one pf the preceding claims, wherein the first electrode tab (114, 214) and the second electrode tab (115, 315) comprise separate auxiliary plates, each of which is coupled to the first side or the second side of the electrode assembly (110, 110A, 110B, 110C, 110D) by welding, and has the shape of a plate extending and protruding from the first side or the second side of the electrode assembly (110, 110A, 110B, 110C, 110D).
